# EUROPEAN PATENT APPLICATION

(11) **EP 4 628 682 A1**
(43) Date of publication of application: **08.10.2025**
(21) Application number: 24172572.0
(22) Date of filing: 25.04.2024
(51) Int. Cl.: E04H 4/16

(54) **WALL-CLIMBING ROBOT FOR CLEANING SWIMMING POOL**

(30) Priority: 07.04.2024 CN 202410410896
(71) Applicant: Yunda H&H Tech (Tianjin) Co., Ltd., Tianjin 301600 (CN)
(72) Inventor: Wei, Enyu, Tianjin, 301600 (CN); Tian, Shengcun, Tianjin, 301600 (CN); Ma, Chao, Tianjin, 301600 (CN); Geng, He, Tianjin, 301600 (CN); Che, Wenyang, Tianjin, 301600 (CN); Du, Zhigang, Tianjin, 301600 (CN)
(74) Representative: Rauch, Udo

(57) **Abstract**

A wall-climbing robot for cleaning swimming pool is provided. The cleaning robot includes a machine body (1), walking assemblies (2) located on both sides of the machine body, and a roller brush assembly (3) located at a front side of the machine body. The roller brush assembly includes a support shaft, and two sections of roller brush bodies (31) rotatably arranged on the support shaft. The support shaft is connected to the machine body. Each walking assembly includes a walking motor, and a first output end and a second output end connected to the walking motor. The first output end is connected to a walking crawler belt (24), and the second output end is connected to the roller brush body. The walking crawler belt and the roller brush body on the same side of the machine body can accelerate and decelerate synchronously.

## Description

### TECHNICAL FIELD

The present disclosure relates to the technical field of swimming pool cleaning, and in particular to a wall-climbing robot for cleaning swimming pool.

### BACKGROUND

Swimming pool cleaning robots are used to clean the dirt in swimming pools or water bodies, and can be divided into water surface cleaning robots and pool bottom cleaning robots according to different parts to be cleaned. The water surface cleaning robots needs to be considered mainly about floating and moving on the water surface, while the underwater cleaning robots needs to be considered about sinking to the bottom and walking on the bottom. Either swimming pool cleaning robot mentioned above includes a machine body and a cleaning device.

In addition to cleaning the water surface and bottom, the sidewall of the swimming pool also needs to be cleaned. However, neither the water surface cleaning robot nor the bottom cleaning robot can walk on the sidewall to complete the cleaning. In this case, a swimming pool cleaning robot capable of climbing the wall is required for cleaning. In the prior art, there are already swimming pool cleaning robots capable of climbing the wall, but it needs to take a lot of energy to attach or adsorb the swimming pool cleaning robot to the surface of the sidewall. The swimming pool cleaning robot without a cable has low cleaning efficiency, and has a short battery life because of the lack of external power supply. Although there is an external power supply for continuous power supply, the swimming pool cleaning robot with a cable is inconvenient to apply, and has the problem of low cleaning efficiency.

In order to improve the endurance of the wall-climbing robot for cleaning swimming pool, it is necessary to increase the battery capacity or provide the cable, or improve the cleaning efficiency. However, the increase of the battery capacity will inevitably lead to the increase of the cost, and the cable is inconvenient for operation. Therefore, how to improve the structure of the swimming pool cleaning robot to improve the cleaning efficiency is a technical problem needing to be considered by those skilled in the art.

### SUMMARY

An objective of some embodiments is to provide a wall-climbing robot for cleaning swimming pool, so as to solve the problems in the prior art. The steering of the machine body can be controlled by controlling walking motors on different sides to have different rotating speeds, and on the basis of synchronous acceleration and deceleration of a roller brush body and a walking crawler belt on the same side, the steering is more flexible, the turning radius is smaller, and a walking path is better controlled, such that the cleaning efficiency can be improved, and the endurance can be further improved.

To achieve the objective above, some embodiments employ the following technical solution:

A wall-climbing robot for cleaning swimming pool includes a machine body, walking assemblies located on both sides of the machine body, and a roller brush assembly located at a front side of the machine body, wherein the roller brush assembly comprises a support shaft, and two sections of roller brush bodies rotatably arranged on the support shaft; the support shaft is connected to the machine body; each of the walking assemblies comprises a walking motor, and a first output end and a second output end connected to the walking motor; the first output end is connected to a walking crawler belt, and the second output end is connected to a corresponding one of the two sections of roller brush bodies; the walking motor on each of different sides of the machine body is able to control a rotating speed, and the walking crawler belt and the corresponding one of the two sections of roller brush bodies on the same side of the machine body are able to accelerate and decelerate synchronously.

Preferably, the walking motor is connected to a driving gear, the driving gear is connected to a first driven gear and a second driven gear, the first driven gear is meshed with the walking crawler belt, the walking crawler belt is driven by a rotation of the first driven gear to run, and the second driven gear is connected to the corresponding one of the two sections of roller brush bodies through a power transmission structure, and the corresponding one of the two sections of roller brush bodies is driven by a rotation of the second driven gear to run.

Preferably, the power transmission structure comprises a first bevel gear, a second bevel gear, a third bevel gear, a fourth bevel gear, and a transmission rod; the first bevel gear is coaxially connected to the second driven gear; the second bevel gear and the third bevel gear are coaxially connected to both ends of the transmission rod, respectively; the fourth bevel gear is coaxially connected to the corresponding one of the two sections of roller brush bodies; the first bevel gear is meshed with the second bevel gear; and the third bevel gear is meshed with the fourth bevel gear.

Preferably, each of the two sections of roller brush bodies comprises a cylinder, and brushes and flexible rubber sheets arranged on a surface of the cylinder, wherein the brushes and the flexible rubber sheets are respectively arranged at intervals in an axial direction of the cylinder, and meanwhile, the brushes and the flexible rubber sheets are distributed at intervals in a circumferential direction of the cylinder.

Preferably, the wall-climbing robot for cleaning swimming pool includes a filter basket, and an impeller, wherein a bottom of the machine body is provided with a water inlet, and the water inlet is connected to an inlet of the filter basket; a top of the machine body is provided with a water outlet, and the water outlet is connected to an outlet of the impeller; the water outlet is inclined towards a rear side of the machine body, and the water inlet is closer to the rear side of the machine body than the water outlet.

Preferably, the inlet of the filter basket is provided with a rubber baffle, one end of the rubber baffle is connected to the filter basket, and an other end of the rubber baffle extends freely; and one side of the rubber baffle is provided with a groove which facilitates the rubber baffle to be folded to an inside the filter basket.

Preferably, the machine body is internally provided with an integrated assembly, the integrated assembly comprises a bottom plate, a control cabin, and a battery module; the control cabin is installed on the bottom plate in a form of a door opening, the battery module is arranged in the door opening of the control cabin, and the walking motor, a water pumping motor and a control module are arranged in the control cabin.

Preferably, a top of the control cabin is provided with a knob switch and a power interface, the knob switch and the power interface pass through a housing of the machine body from bottom to top, and each of the knob switch and the power interface is provided with a waterproof cover.

Preferably, the control cabin is provided with a water input detection device, and the water input detection device is electrically connected to the control module; when the water input detection device detects that the wall-climbing robot is in water, the wall-climbing robot starts running, and when the water input detection device detects that the wall-climbing robot is out of the water, the wall-climbing robot stops running.

Preferably, a front side of a top of the machine body is provided with a handle, and a rear side of the machine body is provided with a discharge opening.

Compared with the prior art, some embodiments have the following technical effects:

By providing two sections of roller brush bodies, each section of roller brush body is driven with a walking assembly on the same side, and a walking motor of the walking assembly can be used as a power source to drive the roller brush body to run, thus making the roller brush body and a walking crawler belt on the same side accelerate or decelerate synchronously. The steering of the machine body can be controlled by controlling walking motors on different sides to have different rotating speeds, and on the basis of synchronous acceleration and deceleration of a roller brush body and a walking crawler belt on the same side, the steering is more flexible, the turning radius is smaller, and a walking path is better controlled, such that the cleaning efficiency can be improved, and the endurance can be further improved.

### BRIEF DESCRIPTION OF THE DRAWINGS

To describe the technical solutions of the embodiments of the present disclosure or in the prior art more clearly, the following briefly introduces the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a side front view of a wall-climbing robot for cleaning swimming pool according to the present disclosure;
FIG. 2 is a side rear view of a wall-climbing robot for cleaning swimming pool according to the present disclosure;
FIG. 3 is a side bottom view of a wall-climbing robot for cleaning swimming pool according to the present disclosure;
FIG. 4 is a longitudinal sectional view of a wall-climbing robot for cleaning swimming pool according to the present disclosure;
FIG. 5 is a schematic diagram of a walking assembly according to the present disclosure;
FIG. 6 is a schematic diagram of a power transmission structure according to the present disclosure;
FIG. 7 is a schematic diagram of a second driven gear and a first bevel gear according to the present disclosure;
FIG. 8 is a schematic diagram of two sections of roller brush bodies according to the present disclosure;
FIG. 9 is a schematic diagram of a roller brush body according to the present disclosure;
FIG. 10 is a schematic diagram of a filter basket and an impeller according to the present disclosure;
FIG. 11 is a side view of an integrated assembly according to the present disclosure;
FIG. 12 is a side view of an integrated assembly according to the present disclosure viewed in another direction.

In the drawings: 1 machine body; 11 filter basket; 12 impeller; 13 control cabin; 131 upper cabin body; 132 lower cabin body; 14 bottom plate; 15 counter weight; 16 battery module; 17 water input detection device; 18 cover plate; 2 walking assembly; 21 driving gear; 22 first driven gear; 23 second driven gear; 231 first bevel gear; 232 second bevel gear; 233 transmission rod; 234 third bevel gear; 235 fourth bevel gear; 24 walking crawler belt; 3 roller brush assembly; 31 roller brush body; 311 brush; 312 flexible rubber sheet; 4 handle; 5 knob switch; 6 power interface; 7 water outlet; 8 water inlet; 9 discharge opening.

### DETAILED DESCRIPTION OF THE EMBODIMENTS

The following clearly and completely describes the technical solutions in the embodiments of the present disclosure with reference to the accompanying drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

An objective of some embodiments is to provide a wall-climbing robot for cleaning swimming pool, so as to solve the problems in the prior art. The steering of the machine body can be controlled by controlling walking motors on different sides to have different rotating speeds, and on the basis of synchronous acceleration and deceleration of a roller brush body and a walking crawler belt on the same side, the steering is more flexible, the turning radius is smaller, and a walking path is better controlled, such that the cleaning efficiency can be improved, and the endurance can be further improved.

In order to make the objectives, technical solutions and advantages of the present disclosure more clearly, the present disclosure is further described in detail below with reference to the embodiments.

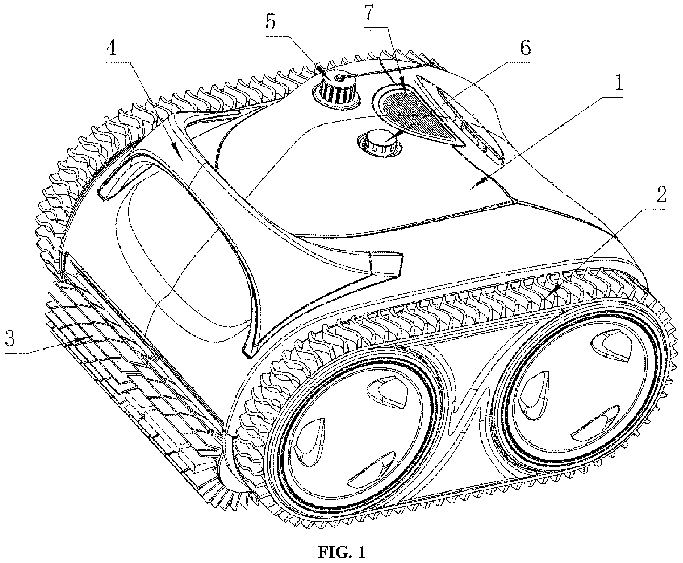

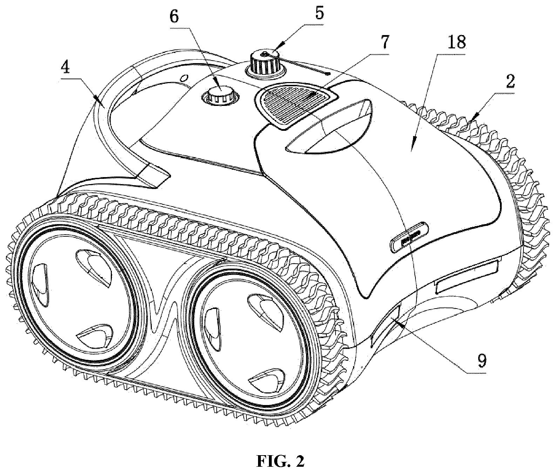

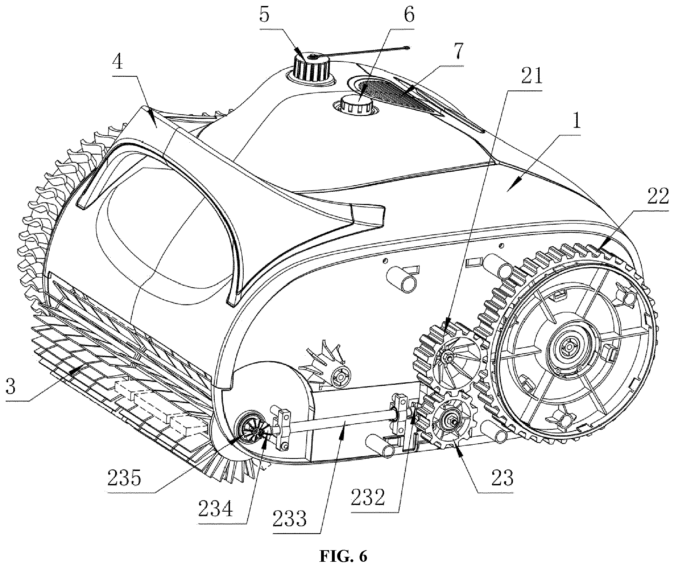

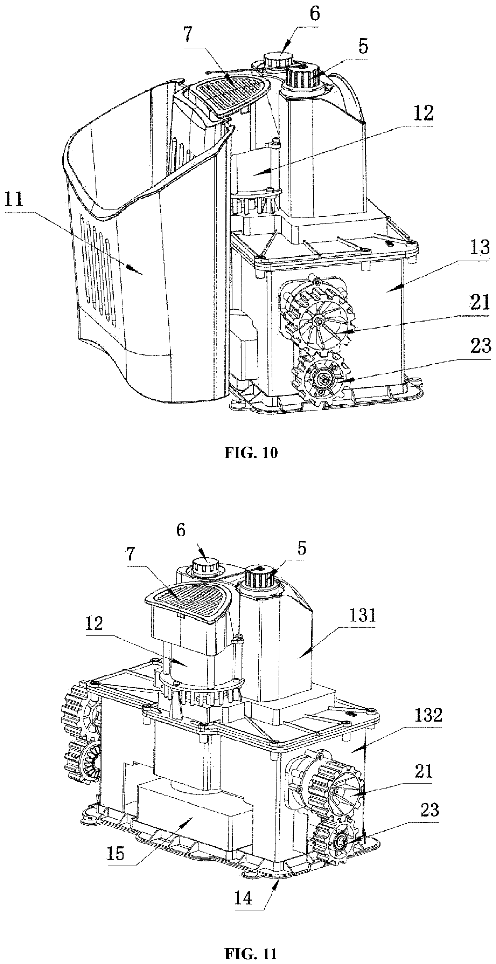

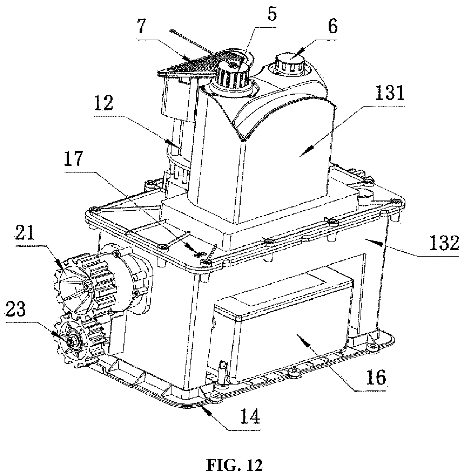

As shown in FIG. 1 to FIG. 12, a wall-climbing robot for cleaning swimming pool is provided, including a machine body 1, walking assemblies 2 located on both sides of the machine body 1, and a roller brush assembly 3 located on a front side of the machine body 1. The machine body 1 serves as a body of the robot, and used for the installation of the roller brush assembly 3 and the walking assembly 2, and is provided with a corresponding control module and a power supply module. When the robot operates, one side where the roller brush assembly 3 is located refers the front side of the robot, and the side opposite to the front side is the rear side. The walking assemblies 2 are symmetrically arranged on left and right sides and configured to provide power for the machine body 1 to travel. The roller brush assembly 3 is configured to clean the dirt on a wall surface or a bottom surface, then the dirt is absorbed and filtered by the cleaning assembly provided by the robot, and is finally accommodated in the filter basket 11, thus completing the cleaning of the wall surface or the bottom surface. Specifically, when the robot travels forwards, the dirt on the bottom surface or wall surface is cleaned by the roller brush assembly 3, and then the dirt enters the filter basket 11 through a water inlet 8 (located on the rear side of the robot) to be collected. The roller brush assembly 3 includes a support shaft, and two sections of roller brush bodies 31 rotatably arranged on the support shaft, and the support shaft is connected to the machine body 1. The walking assembly 2 includes a walking motor, and a first output end and a second output end connected to the walking motor. That is, the walking motor can divide a rotation thereof into two output ends as two power outputs, which can be specifically achieved by means of gear connection and belt transmission. The first output end is connected to a walking crawler belt 24, the second output end is connected to the roller brush body 31, and thus the walking motor can drive the walking crawler belt 24 and the roller brush body 31 to run at the same time. As the walking assemblies 2 on the left and right sides of the robot are respectively connected to independent walking motors, two sets of walking assemblies 2 are formed. The walking assemblies 2 can be controlled to have different rotating speeds by controlling the walking motors on different sides of the machine body 1, and thus each of the walking assemblies 2 may independently control the walking speed. The steering or direction adjustment of the robot can be easily achieved through speed difference between the walking assemblies 2 on both sides. In addition, as the roller brush assembly 3 employs an arranging mode of dividing the roller brush assembly into two sections of roller brush bodies 31 instead of integrally providing, the walking crawler belt 24 and the roller brush body 31 on the same side of the machine body 1 can accelerate and decelerate synchronously. That is, the speed of the roller brush body 31 is adjusted while the speed difference of the walking assemblies 2 is achieved, the resistance caused by the roller brush assembly 3 during steering or direction adjustment can be avoided, and the flexibility of steering can be obviously improved.

By providing two sections of roller brush bodies 31, each section of roller brush body 31 is driven with a walking assembly 2 on the same side, and the walking motor of the walking assembly 2 can be used as a power source to drive the roller brush body 31 to run, thus making the roller brush body 31 and the walking crawler belt 24 on the same side accelerate or decelerate synchronously. The steering of the machine body 1 can be controlled by controlling walking motors on different sides to have different rotating speeds, and on the basis of synchronous acceleration and deceleration of the roller brush body 31 and the walking crawler belt 24 on the same side, the steering is more flexible, the turning radius is smaller, and a walking path is better controlled, such that the cleaning efficiency can be improved, and the endurance can be further improved. Because of the better control of motion and improved cleaning efficiency, larger area can be cleaned on the basis of the same capacity of battery energy, which is equivalent to improving the endurance.

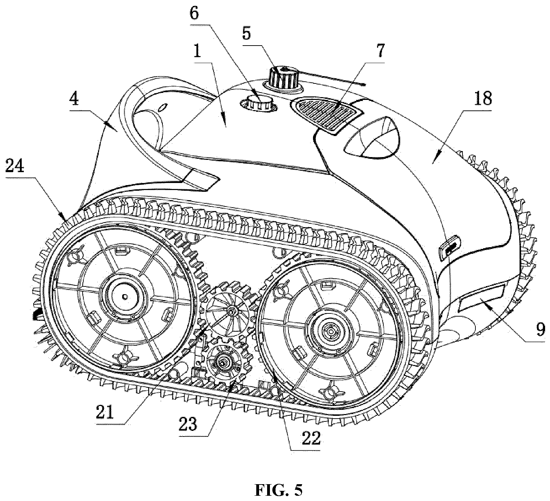

In conjunction with FIG. 5 to FIG. 7 and FIG. 10 to FIG. 12, the walking motor is connected to a driving gear 21, and the driving gear 21 is driven by the walking motor to rotate. The walking motor is installed in the control cabin 13, a rotating shaft passes through the control cabin 13 and then is connected to the driving gear 21, and a waterproof sealing structure is used for sealing. The driving gear 21 is meshed with a first driven gear 22 and a second driven gear 23, and the first driven gear 22 is meshed with a walking crawler belt 24. It should be noted that an other gear supporting the walking crawler belt 24 may not mesh with the driving gear 21, that is, the other gear serves as a driven gear of the first driven gear 22. It may employ the same form as the first driven gear 22, that is, the other gear is further meshed with the driving gear 21, thus forming a structure in which the two first driven gears 22 are simultaneously driven by one driving gear 21 at both sides. At this time, the two first driven gears 22 can achieve the driving effect on the walking crawler belt 24. The second driven gear 23 is connected to the roller brush 31 through a power transmission mechanism, and the roller brush body 31 is driven by the second driven gear 23 to rotate. The power transmission structure may be transmission structures such as a gear and a belt, so as to transmit the power of the driving gear 21 in the middle part of the robot to the roller brush body 31 in the front of the robot. Therefore, the first output end mentioned above may be regarded as the first driven gear 22, and the second output end may be regarded as the second driven gear 23. The walking crawler belt 24 is driven by the rotation of the first driven gear 22 to run, and the roller brush body 31 is driven by the rotation of the second driven gear 23 to run.

Further, the power transmission structure may include a first bevel gear 231, a second bevel gear 232, a third bevel gear 234, a fourth bevel gear 235, and a transmission rod 233. It should be noted that each of the first bevel gear 231, the second bevel gear 232, the third bevel gear 234 and the fourth bevel gear 235 may also be called a bevel wheel, the difference only in name should not be taken as structural constraints, and any structure having the function of perpendicularly changing the transmission direction is within the scope of protection of the present disclosure. The first bevel gear 231 is coaxially connected to the second driven gear 23. The second bevel gear 232 and the third bevel gear 234 are coaxially connected to both ends of the transmission rod 233, respectively. The fourth bevel gear 235 is coaxially connected to the roller brush body 31. The first bevel gear 231 is meshed with the second bevel gear 232, and the third bevel gear 234 is meshed with the fourth bevel gear 235. The driving gear 21 rotates to drive the second driven gear 23 to rotate, and to drive the first bevel gear 231 to rotate at the same time. The torque is transmitted to the front of the robot after a rotation direction is changed by the meshing of the first bevel gear 231 and the second bevel gear 232, and the torque is transmitted to the third bevel gear 234 through the transmission rod 233. The torque is transmitted to the roller brush body 31 after the rotation direction is changed by the meshing of the third bevel gear 234 and the fourth bevel gear 235, thus finally driving the roller brush body 31 to rotate. By reasonably setting a tooth ratio of each meshing gear, a transmission ratio can be limited, and the walking crawler belt 24 and the roller brush body 31 on the same side have a set speed ratio, thus achieving the cleaning effect and walking effect better.

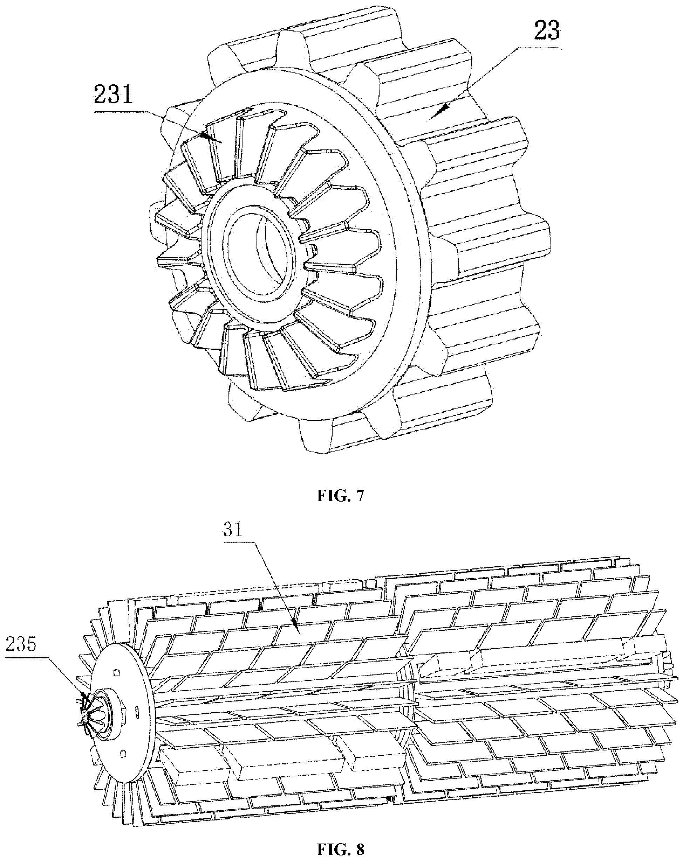

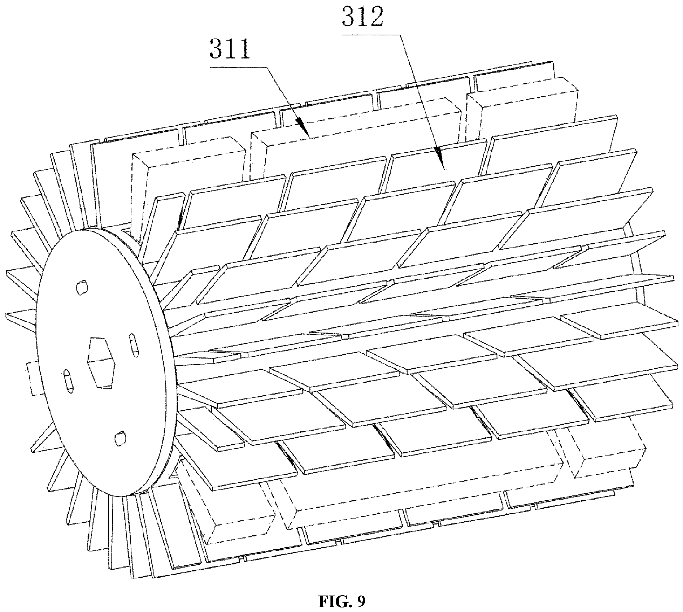

In conjunction with FIG. 8 and FIG. 9, the roller brush body 31 includes a cylinder, and brushes 311 and flexible rubber sheets 312 arranged on the surface of the cylinder. The brush 311 is made of multiple bristles, and has good cleaning effect, but is easy to entangle the hair, and the cleaning effect will be greatly reduced if the brush is not cleaned in time. The flexible rubber sheet 312 may be made of rubber or silica gel, which is soft in texture, relatively poor in cleaning effect, but is not easy to entangle the hair. Through the combination of the brush 311 and the flexible rubber sheet 312, the entanglement of the hair can be reduced or eliminated as much as possible on the basis of ensuring the cleaning effect, and thus the robot is ensured to have lasting cleaning ability. Specifically, during the arrangement of the brush 311 and the flexible rubber sheet 312, the brushes 311 and the flexible rubber sheets 312 are respectively arranged at intervals in an axial direction of the cylinder, that is, there is an interval between every two adjacent brushes 311 along the same axial line, and there is an interval between every two adjacent flexible rubber sheets 312 along the same axial line. Meanwhile, the brushes 311 and the flexible rubber sheets 312 are distributed at intervals in a circumferential direction of the cylinder. In addition, the interval between the brushes 311 in any axial line and the interval between the brushes 311 in another adjacent axial line are staggered. Therefore, the roller brush body 31 can completely cover the wall surface or bottom surface to be cleaned when rolling a circle, thus achieving better cleaning effect.

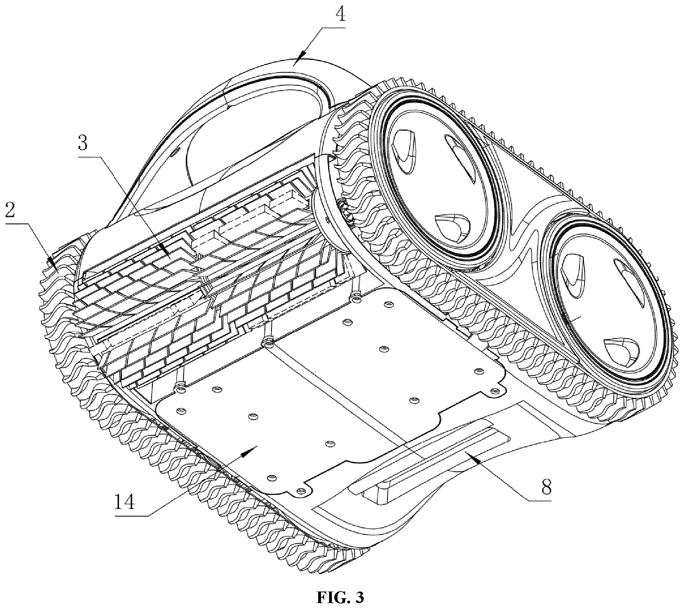

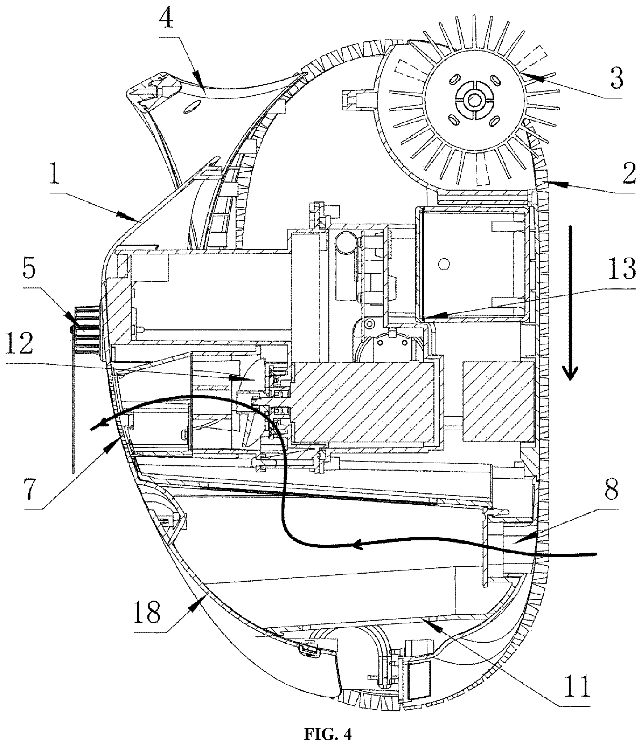

In conjunction with FIG. 3 and FIG. 4 and FIG. 10 to FIG. 12, the wall-climbing robot for cleaning swimming pool includes a filter basket 11, and an impeller 12. The filter basket 11 and the impeller 12 are both installed in the machine body 1. The surface of the machine body 1 where the filter basket 11 is installed is provided with a cover plate 18, and the cover plate 18 may employ an overturn structure or a separated structure. After the cover plate 18 is opened, the filter basket 11 can be taken out from the top of the machine body 1 so as to clean the garbage dirt therein. The impeller 12 is connected to a water pumping motor, and has water pumping power, such that a water body can enter the filter basket 11 from the outside of the machine body 1 and then is discharged from the machine body 1 after being filtered by the filter basket 11. The bottom of the machine body 1 is provided with a water inlet 8 (with reference to the position shown in FIG. 3 and FIG. 4). The water inlet 8 is connected to an inlet of the filter basket 11, and the inlet of the filter basket 11 is located at the bottom of the filter basket 11. The top of the machine body 1 is provided with a water outlet 7, the water outlet 7 may be provided with a grid baffle, and the water outlet 7 is connected to an outlet of the impeller 12. Therefore, under the action of the impeller 12, the water body enters the filter basket 11 from the water inlet 8, then enters the impeller 12 after being filtered by the filter basket 11, and finally is discharged from the water outlet 7 (as shown in FIG. 4). It should be noted that the water outlet 7 is inclined towards the rear side of the machine body 1, and may have a force component function to the bottom and front of the machine body 1 when draining water, thereby providing the pressure for the machine body 1 to attach to the wall and the power for the machine body 1 to move forward. It is ensured that the machine body 1 can walk along the wall surface, the energy consumption of walking is reduced, and the endurance is improved. As the water inlet 8 is located at the bottom surface of the machine body 1, where a negative pressure may be formed during water pumping, and the machine body 1 can be attached to the wall surface better through the external water pressure. In addition, the water inlet 8 is closer to the rear side of the machine body 1 than the water outlet 7, such that the negative pressure suction at the water inlet 8 and positive pressure thrust at the water outlet 7 can act on different parts of the machine body 1 to ensure the stability of the attachment and traveling of the whole robot body on the wall surface.

The inlet of the filter basket 11 is provided with a rubber baffle, one end of the rubber baffle is connected to the filter basket 11, and the other end of the rubber baffle extends freely. The whole rubber baffle covers an inner side of the filter basket 11. When a negative adsorption force is formed under the action of the impeller 12, the rubber baffle is smoothly opened under the impact of water flow, the water body enters the filter basket 11 with the dirt, and then the water body is discharged, while the dirt stays inside the filter basket 11. When the impeller 12 stops running, the rubber baffle recovers to an original state to cover the inlet of the filter basket 11, thus preventing the dirt from being discharged from the inlet of the filter basket 11. One side of the rubber baffle is provided with a groove which facilitates the rubber baffle to be folded to the inside the filter basket 11, and the groove can reduce the bending resistance of the rubber baffle, so as to convenient for water input. Meanwhile, the rubber baffle can be kept closed and the inlet of the filter basket 11 can be closed by the water pressure and dirt pressure inside the filter basket 11 when water input is not needed.

As shown in FIG. 3, FIG. 10 to FIG. 12, the machine body 1 is internally provided with an integrated assembly. The integrated assembly includes a bottom plate 14, a control cabin 13, and a battery module 16. The integrated assembly may be pulled out from the bottom of the machine body 1 as a whole, thus facilitating the overhauling and maintenance. As shown in FIG. 3, after an installing screw on the bottom plate 14 is removed, the integrated assembly shown in FIG. 15 and FIG. 16 can be removed as a whole. The control cabin 13 is installed on the bottom plate 14 in the form of a door opening, and the battery module 16 is arranged in the door opening of the control cabin 13. The battery module 16 itself has waterproof function, and is internally provided with a rechargeable battery. The rechargeable battery is connected into the control cabin 13 by a wire to achieve power supply and charging management. In addition, in order to keep the stability of the center of gravity of the robot and the operation of the robot in underwater environment, a counter weight 15 may further be arranged in the door opening. The control cabin 13 is internally provided with a walking motor, a water pumping motor and a control module, etc. The control cabin 13 can be divided into an upper cabin body 131 and a lower cabin body 132 to facilitate the disassembly and installation of internal structures. Meanwhile, a waterproof sealing structure such as a sealing ring is arranged between the upper cabin body 131 and the lower cabin body 132.

The top of the control cabin 13 is provided with a knob switch 5 and a power interface 6. During the installation of the integrated assembly, the knob switch 5 and the power interface 6 may pass through a housing of the machine body 1 from bottom to top, the operation is convenient, and the integrated assembly can be entirely removed conveniently. The knob switch 5 is used for controlling a switch of the robot, and the power interface 6 may be connected to an external power supply to charge the battery module 16, or may be directly powered using a cable. Each of the knob switch 5 and the power interface 6 is provided with a waterproof cover, so as to adapt to the underwater environment. Each of the knob switch 5 and the power interface 6 may further be connected to an anti-lost rope. When switching operation or charging operation is needed, the waterproof cover needs to be removed, and the anti-lost rope can prevent the waterproof cover from being lost.

The control cabin 13 is provided with a water input detection device 17, and a specific position where the water input detection device 17 may be adjusted and arranged as required. The water input detection device 17 is electrically connected to the control module. When the water input detection device 17 detects that the robot is in water, the robot starts running, and when the water input detection device 17 detects that the robot is out of the water, the robot stops running. The above mode of starting and stopping operation is based on the knob switch 5, that is, the above mode of starting and stopping operation can only be carried out after the knob switch 5 is turned on.

As shown in FIG. 1 to FIG. 6, the front side of the top of the machine body 1 is provided with a handle 4, and the rear side of the machine body 1 is provided with a discharge opening 9. When the machine body 1 is lifted by the handle 4, the discharge opening 9 is located at the lower side. At this time, the water body in the machine body 1 naturally flows out through the discharge opening 9, which is convenient for discharge of the water body in the machine body 1. A baffle prone to turning outwards can be arranged at the discharge opening 9, and it is preferable to employ a one-way water output mode, so when the impeller 12 runs, the water is fed only through the water inlet 8, and all the dirt enters the inside of the filter basket 11 from the water inlet 8, and is prevented from entering other spaces in the machine body 1 through the discharge opening 9, and meanwhile, the power loss of the impeller 12 can be reduced.

Specific examples are used herein for illustration of the principles and implementation methods of the present disclosure. The description of the embodiments is merely used to help illustrate the method and its core principles of the present disclosure. In addition, a person of ordinary skill in the art can make various modifications in terms of specific embodiments and scope of application in accordance with the teachings of the present disclosure. In conclusion, the content of this specification shall not be construed as a limitation to the present disclosure.

## Claims

1. A wall-climbing robot for cleaning swimming pool, comprising a machine body, walking assemblies located on both sides of the machine body, and a roller brush assembly located at a front side of the machine body, wherein the roller brush assembly comprises a support shaft, and two sections of roller brush bodies rotatably arranged on the support shaft; the support shaft is connected to the machine body; each of the walking assemblies comprises a walking motor, and a first output end and a second output end connected to the walking motor; the first output end is connected to a walking crawler belt, and the second output end is connected to a corresponding one of the two sections of roller brush bodies; the walking motor on each of different sides of the machine body is able to control a rotating speed, and the walking crawler belt and the corresponding one of the two sections of roller brush bodies on the same side of the machine body are able to accelerate and decelerate synchronously.

2. The wall-climbing robot for cleaning swimming pool according to claim 1, wherein the walking motor is connected to a driving gear, the driving gear is connected to a first driven gear and a second driven gear, the first driven gear is meshed with the walking crawler belt, the walking crawler belt is driven by a rotation of the first driven gear to run, and the second driven gear is connected to the corresponding one of the two sections of roller brush bodies through a power transmission structure, and the corresponding one of the two sections of roller brush bodies is driven by a rotation of the second driven gear to run.

3. The wall-climbing robot for cleaning swimming pool according to claim 2, wherein the power transmission structure comprises a first bevel gear, a second bevel gear, a third bevel gear, a fourth bevel gear, and a transmission rod; the first bevel gear is coaxially connected to the second driven gear; the second bevel gear and the third bevel gear are coaxially connected to both ends of the transmission rod, respectively; the fourth bevel gear is coaxially connected to the corresponding one of the two sections of roller brush bodies; the first bevel gear is meshed with the second bevel gear; and the third bevel gear is meshed with the fourth bevel gear.

4. The wall-climbing robot for cleaning swimming pool according to claim 1, wherein each of the two sections of roller brush bodies comprises a cylinder, and brushes and flexible rubber sheets arranged on a surface of the cylinder, wherein the brushes and the flexible rubber sheets are respectively arranged at intervals in an axial direction of the cylinder, and meanwhile, the brushes and the flexible rubber sheets are distributed at intervals in a circumferential direction of the cylinder.

5. The wall-climbing robot for cleaning swimming pool according to claim 1, comprising a filter basket, and an impeller, wherein a bottom of the machine body is provided with a water inlet, and the water inlet is connected to an inlet of the filter basket; a top of the machine body is provided with a water outlet, and the water outlet is connected to an outlet of the impeller; the water outlet is inclined towards a rear side of the machine body, and the water inlet is closer to the rear side of the machine body than the water outlet.

6. The wall-climbing robot for cleaning swimming pool according to claim 5, wherein the inlet of the filter basket is provided with a rubber baffle, one end of the rubber baffle is connected to the filter basket, and an other end of the rubber baffle extends freely; and one side of the rubber baffle is provided with a groove which facilitates the rubber baffle to be folded to an inside the filter basket.

7. The wall-climbing robot for cleaning swimming pool according to claim 1, wherein the machine body is internally provided with an integrated assembly, the integrated assembly comprises a bottom plate, a control cabin, and a battery module; the control cabin is installed on the bottom plate in a form of a door opening, the battery module is arranged in the door opening of the control cabin, and the walking motor, a water pumping motor and a control module are arranged in the control cabin.

8. The wall-climbing robot for cleaning swimming pool according to claim 7, wherein a top of the control cabin is provided with a knob switch and a power interface, the knob switch and the power interface pass through a housing of the machine body from bottom to top, and each of the knob switch and the power interface is provided with a waterproof cover.

9. The wall-climbing robot for cleaning swimming pool according to claim 7, wherein the control cabin is provided with a water input detection device, and the water input detection device is electrically connected to the control module; when the water input detection device detects that the wall-climbing robot is in water, the wall-climbing robot starts running, and when the water input detection device detects that the wall-climbing robot is out of the water, the wall-climbing robot stops running.

10. The wall-climbing robot for cleaning swimming pool according to claim 1, wherein a front side of a top of the machine body is provided with a handle, and a rear side of the machine body is provided with a discharge opening.
